# FASCICULE DE BREVET EUROPEEN

(11) **EP 0 895 894 B1**
(45) Date de publication et mention de la délivrance du brevet: **11.10.2000**
(21) Numéro de dépôt: 98470017.9
(22) Date de dépôt: 24.07.1998
(51) Int. Cl.: B60N 2/44, B05D 1/14

(54) **Elément de véhicule automobile comportant un revêtement floqué, et procédé de flocage d'un tel élément**
Ein Autoteil mit einer geflockten Auskleidung und Verfahren zum Flocken eines solchen Teiles
Part of an automobile with a flocked lining and procedure for flocking such a part

(30) Priorité: 05.08.1997 FR 9710178
(43) Date de publication de la demande: 10.02.1999
(73) Titulaire: BERTRAND FAURE EQUIPEMENTS S.A., 92641 Boulogne Cedex (FR)
(72) Inventeur: Pichon, Hugues, 57000 Metz (FR); Petra, Jean-Marc, 57000 Metz (FR)
(74) Mandataire: Ballot, Paul Denis Jacques

(56) Documents cités:
- DE-A- 1 920 529
- DE-A- 4 401 417
- FR-A- 2 442 721
- FR-A- 2 708 843
- GB-A- 2 277 441
- US-A- 2 791 268

## Description

La présente invention concerne la réalisation de revêtements d'éléments intérieurs de véhicules automobiles par la technique de flocage. De tels revêtements peuvent être en particulier utilisés pour des éléments de siège, tels que assises ou dossiers, accoudoirs, appuie-têtes, ou seulement une partie de ces éléments, mais aussi pour d'autres éléments internes de voitures, tels que certaines parois de l'habitacle ou de la planche de bord par exemple.

Il est rappelé que, de manière générale, la technique du flocage consiste à appliquer sur un support adhésif des fibres plus ou moins longues, en un matériau tel que laine, coton, ou fibres synthétiques, appelées flock. Le support ainsi revêtu présente un aspect velouté, résultant de l'orientation générale des fibres perpendiculairement à la surface du support. Un procédé connu de flocage consiste à appliquer sur le support une couche d'adhésif sur laquelle les fibres sont déposées au moyen d'un distributeur de flock, la répartition des fibres étant obtenue grâce à l'établissement d'un champ électrique entre le dit distributeur et le support, ce champ permettant d'assurer l'attraction des fibres vers le support ainsi que leur ancrage sur la couche d'adhésif avec l'orientation souhaitée.

On connaît déjà, notamment par les documents FR-A-2708843 (correspondant au préambule de la revendication 1), FR-A-2709050 et FR-A-2709051, un procédé de flocage de supports fragiles, tels que des capitonnages en mousse moulée ou découpée destinés à l'ameublement ou à l'automobile, selon lequel il est prévu de renforcer la résistance de la surface de ces supports par une couche intermédiaire d'un matériau élastomère, cette couche intermédiaire pouvant elle-même constituer l'adhésif pour les fibres de flocage. Ce procédé vise à obtenir une meilleure résistance du produit floqué à l'abrasion et aux déchirures, ainsi qu'à améliorer l'aspect de surface, notamment dans le cas d'un support en mousse découpée ou moulée dont la surface peut être granuleuse ou présenter des aspérités. Il vise également à permettre le flocage de surfaces sculptées ou de formes en dépouille ou contre-dépouille.

La présente invention vise aux mêmes résultats, mais avec un coût réduit et une simplification du procédé, et vise également à permettre de donner un aspect particulier à la surface floquée.

Avec ces objectifs en vue, l'invention a pour objet un élément de véhicule automobile présentant un corps et un revêtement extérieur floqué, le dit revêtement étant constitué de flock maintenu sur la surface du corps par une pellicule d'adhésif, caractérisé en ce qu'il comporte un voile textile fin couvrant la dite surface et adhérent sur celle-ci, et le flock couvre le dit voile textile.

Ce voile peut être un textile tricoté, ou tissé, ou non-tissé, apte à épouser par allongement localisé des formes tridimensionnelles de la surface. Typiquement, on utilisera un textile en matière synthétique, tel que par exemple en polyamide ou polyester.

L'invention s'applique particulièrement au flocage de pièces dont le corps est en un matériau déformable, compressible, tel que par exemple en mousse synthétique, mousse de polyuréthanne souple moulée ou découpée, ou en fibres de polyester, crin latexé, ou toute autre mousse, alvéolaire ou non. Dans ces applications, un avantage particulier du voile textile est qu'il renforce la résistance de la pièce, notamment sa résistance aux déchirures, tout en conservant sa souplesse d'origine. En effet, les mousses précitées, couramment utilisées par exemple comme matelassure de sièges, présentent l'inconvénient de se déchirer relativement facilement lorsqu'elles sont soumises à des efforts, tels que ceux qui peuvent être exercés en surface suite à une charge localisée, par exemple sous le poids de l'utilisateur du siège, ou simplement suite aux frottements qui peuvent se produire lors des mouvements de l'utilisateur. C'est l'une des raisons pour lesquelles classiquement ces matelassures ou rembourrages sont recouverts d'un revêtement de finition en tissu, velours, cuir, ou similaires. La mise en place de tels revêtements est parfois délicate, car il est nécessaire d'assurer le maintien du revêtement sur la matelassure, ce qui nécessite soit l'utilisation de systèmes d'accrochage du revêtement sur l'armature du siège, soit le collage du revêtement sur la matelassure en mousse. De plus, la préparation de ces revêtements nécessite des opérations de coupe et couture pour leur donner une forme adaptée au recouvrement des divers éléments de siège. Tout ceci entraîne donc des coûts non négligeables. L'invention permet de réduire ces coûts en réalisant le revêtement de finition de ces éléments de siège par flocage, sans cependant nuire à la résistance, grâce au renfort fourni par le voile textile dont les fibres, qui s'étendent globalement parallèlement à la surface et adhèrent sur celle-ci, limitent les risques d'amorces de déchirures.

De plus, ce voile, qui est tendu sur la pièce, aplanit les petits défauts de surface des matelassures, tels que aspérités provoquées lors de la coupe des blocs de mousse, ou creux résultants de bulles générées lors de leur moulage.

Bien que l'invention soit donc particulièrement avantageuse pour le flocage de pièces en mousse relativement souple, elle peut également s'appliquer à des pièces présentant une plus grande rigidité, tels que des rembourrages en mousse rigide ou autres matériaux classiquement utilisés par exemple pour des parties latérales de sièges, dormants de portières, ou tout autre élément intérieur de voiture susceptible de recevoir un revêtement d'aspect velouté.

Quel que soit le cas, le voile textile permet de plus de donner à la surface floquée un aspect de texture correspondant à celle du voile utilisé, par exemple un aspect tramé lorsque le voile est tissé.

Préférentiellement, le voile textile est fixé sur la surface de l'élément floqué par de la colle qui assure aussi le maintien du flock. Le voile constitue ainsi une sorte d'armature intimement lié au film de colle, et donc à la fois au corps de l'élément et aux fibres de flock, et ceci en ne procédant qu'à un seul encollage.

L'invention a aussi pour objet un procédé de flocage d'un élément de véhicule automobile, selon lequel on encolle la surface d'un corps du dit élément puis on projette du flock sur la surface encollée, ce procédé étant caractérisé en ce que, avant l'encollage, on revêt la surface du corps d'un voile textile fin.

Selon une disposition particulière, le voile textile est maintenu tendu sur la surface par des baguettes de tension formant un cadre entourant les contours de la surface à floquer.

Selon une autre disposition particulière, destinée au flocage d'éléments présentant un corps de forme annulaire, on utilise un voile textile tubulaire, que l'on passe dans l'orifice du corps et que l'on rabat autour de la surface périphérique du dit corps.

Selon encore une autre disposition, pour le flocage d'éléments présentant un corps ayant des contours convexes, on fixe le voile textile sur un cadre de dimensions supérieures à celle de la surface à floquer et on applique le voile sur la surface du corps en poussant le cadre autour du corps.

D'autres caractéristiques et avantages apparaîtront dans la description qui va être faite de différents modes de réalisation du procédé de flocage selon l'invention, adaptés en fonction des formes des éléments à revêtir.

On se reportera aux dessins annexés, dans lesquels
- les figures 1 à 4 illustrent les différentes étapes du flocage d'un élément de siège de forme générale parallélépipèdique, tel que par exemple un coussin de siège ou un appuie-tête plein,
- les figures 5 à 8 illustrent une première méthode de mise en place du voile textile pour le flocage d'un appuie-tête ajouré,
- les figures 9 et 10 illustrent une deuxième méthode utilisable pour le flocage d'un tel appuie-tête, ou d'une pièce ayant une forme en creux.

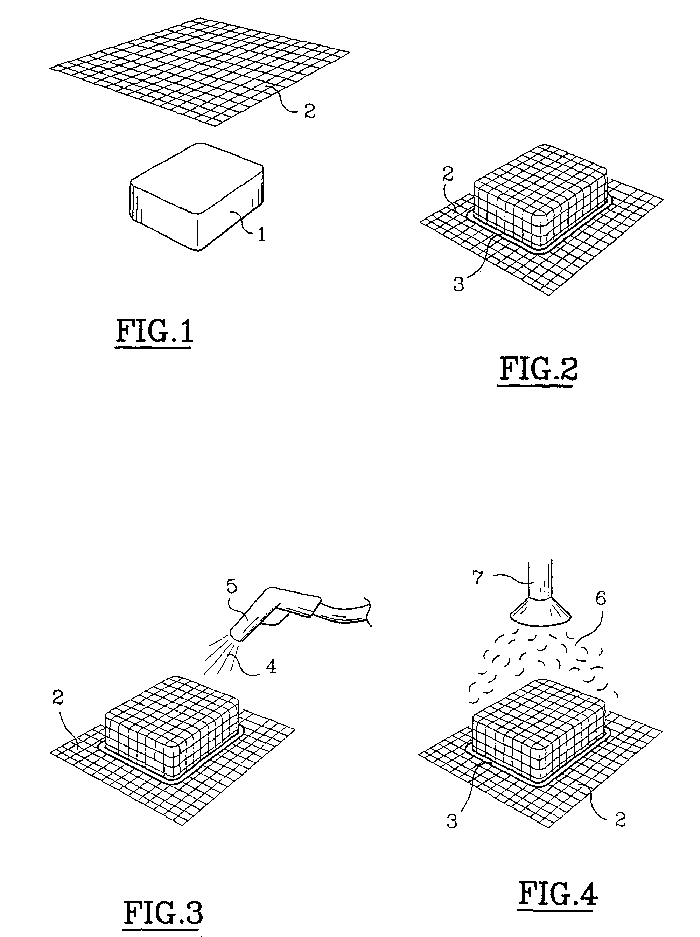

A la figure 1, on a représenté un bloc de mousse 1, par exemple en mousse de polyuréthanne, constituant le corps de la pièce fabriquée, ainsi que un morceau de voile textile 2. Le voile 2 est présenté, légèrement tendu, sur le bloc 1. On vient ensuite placer sur le voile un cadre de maintien 3 de dimensions correspondant à celles du contour du bloc, et on pousse ce cadre autour du bloc 1 de manière y appliquer le voile avec une certaine tension , comme représenté figure 2. Grâce à la souplesse du voile et à sa capacité de déformation, il s'applique sur la surface du bloc de manière uniforme, sans former de plis. Le cadre 3 peut être maintenu dans la position représentée simplement par coincement autour du bloc, ou par des moyens de maintien mécaniques annexes, non représentés.

On procède ensuite à l'encollage, comme représenté figure 3, par pulvérisation d'une colle conductrice 4 au moyen d'un pistolet 5. La colle est donc appliquée sur le voile mais s'infiltre également à travers celui-ci pour adhérer sur la surface du bloc.

On réalise ensuite le flocage, de manière connue en soi, en projetant les fibres de flock 6 sur la surface précédemment encollée, au moyen d'un champ électrostatique établi entre le distributeur 7 de flock et la pellicule de colle conductrice.

Lorsque le flocage est terminé et que la colle est prise, on retire le cadre 3, et on peut alors découper le pourtour en excédent du voile, ou le replier sur l'envers de la pièce.

Pour éviter que le cadre 3 ne se retrouve collé à la pièce et également floqué, d'une part, on recouvrira au préalable le cadre d'une couche de protection, et de plus, on réalisera ce cadre en un matériau non conducteur, pour éviter que le flock ne vienne également le recouvrir.

Dans les deux exemples suivants, l'encollage et le flocage sont réalisés de manière similaire à ce qui vient d'être expliqué. On ne va donc décrire que la mise en place et le maintien du voile et les moyens utilisés à cet effet.

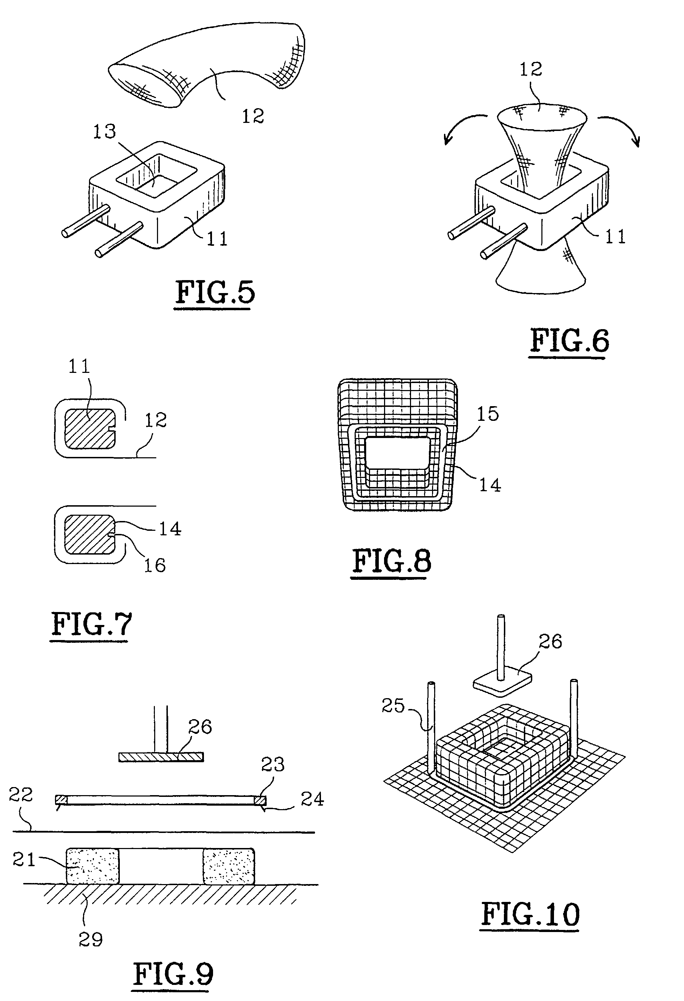

La figure 5 représente schématiquement un appuie-tête ajourée 11. Le voile textile utilisé dans ce cas se présente sous forme d'un voile tubulaire 12. Ce voile est inséré dans l'orifice 13 de l'appuie-tête puis tendu et replié autour de l'appuie-tête comme on le voit figures 6 et 7, ceci étant possible grâce aux grandes capacités de déformation du voile. Son élasticité fait que le voile s'applique parfaitement contre toutes les faces intérieures et extérieures de l'appuie-tête. Le maintien du voile est ensuite assuré sur l'envers 14 de l'appuie-tête, comme représenté figure 8, par exemple par une baguette 15 coincée dans une rainure 16 ménagée à cet effet dans la dite face envers 14.

Les figures 9 et 10 illustrent une autre méthode de maintien du voile sur une pièce ajourée 21. Dans cette variante, la pièce 21 est placée sur un support 29. Pour maintenir le voile autour de la pièce, on utilise un cadre 23 pourvu de picots 24 qui agrippent le voile 2, qui est ici un voile plan comme dans le mode de réalisation des figures 1 à 4, le cadre 23 étant poussé autour de la pièce 21, puis maintenu appuyé contre le support 29, comme représenté figure 10, par des tiges de poussée 25. Le voile pourra également être prétendu sur le cadre et maintenue grâce aux picots 24. Par ailleurs, on utilise un poinçon 26 de dimensions correspondantes à celles de l'orifice central de la pièce pour pousser le voile dans cet orifice, de manière à l'appliquer contre les parois du dit orifice. On réalise ensuite l'encollage et le flocage comme indiqué précédemment.

L'invention n'est nullement limitée aux modes de réalisation du procédé de flocage, ni aux objets floqués, qui ont été décrits ci-dessus uniquement à titre d'exemples. En particulier, le flocage selon l'invention pourra être utilisé non seulement sur toute pièce ou toute partie de pièce présentant des surfaces planes ou convexes, mais aussi sur des surfaces concaves, dans la mesure où la forme particulière de telles surfaces permet d'y appliquer et d'y maintenir le voile textile pendant l'encollage et le flocage.

## Revendications

1. Elément de véhicule automobile présentant un corps (1, 11, 21) et un revêtement extérieur floqué, le dit revêtement étant constitué de flock maintenu sur la surface du corps par une pellicule d'adhésif, caractérisé en ce qu'il comporte un voile textile fin (2, 12, 22) couvrant la dite surface et adhérent sur celle-ci, et le flock couvre le dit voile textile.

2. Elément de véhicule selon la revendication 1, caractérisé en ce que le voile est fixé sur la surface de l'élément par de la colle qui assure aussi le maintien du flock.

3. Elément de véhicule selon la revendication 1, caractérisé en ce que le voile textile est un textile tricoté, ou tissé, ou non-tissé, apte à épouser par allongement localisé des formes tridimensionnelles de la surface.

4. Elément de véhicule selon la revendication 3 caractérisé en ce que le voile textile est en matière synthétique.

5. Elément de véhicule selon la revendication 1, caractérisé en ce que le corps est en mousse synthétique.

6. Elément de véhicule selon la revendication 1, caractérisé en ce qu'il constitue un élément de siège.

7. Procédé de flocage d'un élément de véhicule automobile, selon lequel on encolle la surface d'un corps (1, 11, 21) du dit élément puis on projette du flock (6) sur la surface encollée, caractérisé en ce que, avant l'encollage, on revêt la surface du corps d'un voile textile fin (2, 12, 22).

8. Procédé selon la revendication 7, caractérisé en ce que le voile textile est maintenu tendu sur la surface par des baguettes de tension (3, 23) entourant les contours de la surface à floquer.

9. Procédé selon la revendication 7, pour le flocage d'éléments présentant un corps (11) de forme annulaire, caractérisé en ce qu'on utilise un voile textile tubulaire (12), que l'on passe dans l'orifice (13) du corps et que l'on rabat autour de la surface périphérique du dit corps.

10. Procédé selon la revendication 7, pour le flocage d'éléments présentant un corps (21) ayant des contours convexes, caractérisé en ce qu'on fixe le voile textile (22) sur un cadre (23) de dimensions supérieures à celle de la dite surface et on applique le voile sur la surface du corps en poussant le cadre autour du corps.

## Patentansprüche

1. Kraftfahrzeugelement mit einem Körper (1, 11, 21) und einer beflockten äußeren Verkleidung, wobei die Verkleidung aus Flockmaterial besteht, das von einer Haftfolie auf der Oberfläche des Körpers gehalten wird, dadurch gekennzeichnet, dass es eine feine Textilabdeckung (2, 12, 22) aufweist, die die Oberfläche bedeckt und an dieser haftet, und dass das Flockmaterial die Textilabdeckung bedeckt.

2. Fahrzeugelement nach Anspruch 1, dadurch gekennzeichnet, dass die Abdeckung mit dem Kleber, der auch den Halt des Flockmaterials sicherstellt, auf der Oberfläche des Elements befestigt ist.

3. Fahrzeugelement nach Anspruch 1, dadurch gekennzeichnet, dass die Textilabdeckung aus gestricktem, gewebtem oder nichtgewebtem Textilmaterial besteht, das sich durch örtlich begrenzte Dehnung an dreidimensionale Formen der Oberfläche anpassen kann.

4. Fahrzeugelement nach Anspruch 3, dadurch gekennzeichnet, dass die Textilabdeckung aus synthetischem Material ist.

5. Fahrzeugelement nach Anspruch 1, dadurch gekennzeichnet, dass der Körper aus synthetischem Schaum ist.

6. Fahrzeugelement nach Anspruch 1, dadurch gekennzeichnet, dass es ein Sitzelement darstellt.

7. Verfahren zum Beflocken eines Kraftfahrzeugelements, bei dem die Oberfläche eines Körpers (1, 11, 21) des Elements mit Kleber versehen und dann Flockmaterial (6) auf diese Oberfläche geschleudert wird, dadurch gekennzeichnet, dass die Oberfläche des Körpers vor Auftragen des Klebers mit einer feinen Textilabdeckung (2, 12, 22) überzogen wird.

8. Verfahren nach Anspruch 7, dadurch gekennzeichnet, dass die Textilabdeckung auf der Oberfläche durch Aufspannstäbe (3, 23) gespannt gehalten wird, die die Konturen der zu beflockenden Oberfläche umgeben.

9. Verfahren gemäß Anspruch 7 zum Beflocken von Elementen mit ringförmigem Körper (11), dadurch gekennzeichnet, dass eine röhrenförmige Textilabdeckung (12) verwendet wird, die in die Öffnung (13) des Körpers geführt und um die seitliche Oberfläche des Körpers umgeschlagen wird.

10. Verfahren gemäß Anspruch 7 zum Beflocken von Elementen mit einem Körper (21) mit konvexen Konturen, dadurch gekennzeichnet, dass die Textilabdeckung (22) auf einem Rahmen (23) befestigt wird, dessen Abmessungen größer sind als die der zu beflockenden Oberfläche, und dass die Abdeckung auf der Oberfläche des Körpers angebracht wird, indem der Rahmen um den Körper gedrückt wird.

## Claims

1. Element of an automobile which has a body (1, 11, 21) and a flocked exterior covering, the said covering consisting of flock held on the surface of the body by a film of adhesive, characterised in that it includes a fine textile gauze (2, 12, 22) covering the said surface and adhering thereto, and the flock covers the said textile gauze.

2. Element of a vehicle according to Claim 1, characterised in that the gauze is fixed on the surface of the element by the glue which also ensures retention of the flock.

3. Element of a vehicle according to Claim 1, characterised in that the textile gauze is a knitted or woven or non-woven textile capable of following three-dimensional shapes of the surface by localised elongation.

4. Element of a vehicle according to Claim 3, characterised in that the textile gauze is made from synthetic material.

5. Element of a vehicle according to Claim 1, characterised in that the body is made from synthetic foam.

6. Element of a vehicle according to Claim 1, characterised in that it constitutes a seating element.

7. Method of flocking an element of an automobile, according to which the surface of a body (1, 11, 21) of the said element is glued, then flock (6) is projected onto the glued surface, characterised in that before the glueing the surface of the body is covered with a fine textile gauze (2, 12, 22).

8. Method according to Claim 7, characterised in that the textile gauze is kept stretched on the surface by tension rods (3, 23) surrounding the contours of the surface to be flocked.

9. Method according to Claim 7, for the flocking of elements having a body (11) of annular shape, characterised in that a tubular textile gauze (12) is used which is passed into the orifice (13) of the body and is turned back around the peripheral surface of the said body.

10. Method according to Claim 7, for the flocking of elements having a body (21) with convex contours, characterised in that the textile gauze (22) is fixed on a frame (23) having dimensions greater than those of the said surface and the gauze is applied to the surface of the body by pushing the frame around the body.
